# EUROPÄISCHE PATENTSCHRIFT

(11) **EP 1 326 456 B1**
(45) Veröffentlichungstag und Bekanntmachung des Hinweises auf die Patenterteilung: **04.05.2011**
(21) Anmeldenummer: 03003074.6
(22) Anmeldetag: 26.03.1999
(51) Int. Cl.: H04W 88/02

(54) **Verfahren, um die Dauer von zu verrechnenden Prozessen zu ermitteln**
Method for determining the duration of processes to be charged
Procédé à déterminer la durée des processus compensables

(43) Veröffentlichungstag der Anmeldung: 09.07.2003
(62) Teilanmeldung aus: 99908730.7
(73) Patentinhaber: Swisscom AG, 3050 Bern (CH)
(72) Erfinder: Ritter, Rudolf, 3052 Zollikofen (CH)
(74) Vertreter: P&TS Patents & Technology Surveys SA

(56) Entgegenhaltungen:
- EP-A- 0 902 552
- WO-A-97/40616
- US-A- 5 546 445
- E. D. Kaplan: "Understanding GPS: principles and applications" 31 December 1996 (1996-12-31), Artech House , Norwood, MA, US ISBN: 0-89006-793-7 * Abschnitt 12.5. *

## Beschreibung

### Technisches Gebiet

Die vorliegende Erfindung betrifft ein Verfahren, um die Dauer von zu verrechnenden Prozessen zu ermitteln.

### Stand der Technik

In Telekommunikationsnetzwerken, zum Beispiel in Telekommunikationsnetzwerken nach dem GSM-Standard, hängt die zu verrechnende Verbindungsgebühr von verschiedenen Parametern ab, unter anderem von der Dauer der Verbindung, von der Tageszeit und vom geographischen Standort des anrufenden und des angerufenen Benutzers. Diese Parameter werden meistens in der Infrastruktur des Netzes, zum Beispiel in einer Billingszentrale, ermittelt. Aus diesen Parametern wird dann die Verbindungsgebühr ermittelt und dem Konto des Benutzers beim Netzbetreiber oder bei einem Finanzinstitut belastet. Dieses Verrechnungsverfahren ist extrem aufwendig und teuer für den Netzbetreiber und verlangt ein komplexes Verrechnungssystem und viele manuelle oder halbautomatische Operationen.

Das Patentdokument EP-A2-0 656 733 beschreibt ein Verrechnungssystem für Mobilgeräte, in welchem alle Verbindungsparameter, die zur Ermittlung der verrechneten Gebühr nötig sind, im Speicher des Mobilgeräts gespeichert sind. Dieser Betrag kann dann auf der Anzeige des Mobilgeräts zur Information angezeigt werden. Es ist jedoch in diesem Dokument nicht beschrieben, wie die ermittelte Gebühr automatisch verrechnet werden kann. Ausserdem werden die Verbindungsdauer und die Verbindungszeit mit Hilfe der internen Uhr des Mobilgeräts ermittelt. Der Netzbetreiber hat keinen Einfluss auf die Genauigkeit der Uhr in von anderen Herstellern angebotenen Mobilgeräten. Diese Uhr kann in den meisten Mobilgeräten von den Benutzern eingestellt werden, so dass ein Missbrauch durch Einstellung der Uhr auf eine günstigere Tarifperiode leicht möglich ist.

Das Patentdokument FR-A1-2 680 261 beschreibt eine Telefon-Chipkarte, die ein Prepaid-Konto sowie Tariftabellen enthält. Die verrechneten Gebühren für die Verbindungen werden aus dem Prepaid-Konto in Abhängigkeit von der Verbindungsdauer und der gespeicherten Tarife ermittelt. Die Zeit und die Dauer der Verbindungen werden ebenfalls in einer externen Vorrichtung ermittelt.

Die Patentanmeldung WO-A1-99/31868 beschreibt ein Verrechnungsverfahren, um einem mit einer Identifizierungskarte identifizierten Teilnehmer in einem Telekommunikationsnetz einen Anruf zu verrechnen. In diesem Verrechnungsverfahren wird die Dauer des Anrufs durch einen in der Identifizierungskarte integrierten Quarzoszillator gemessen. Der verrechnete Betrag wird dann in Abhängigkeit von der ermittelten Anrufdauer und von mindestens einer in der Identifizierungskarte gespeicherten Tariftabelle ausgewertet.

Dadurch können die wichtigsten für die Auswertung des verrechneten Betrags benötigten Parameter direkt auf der Karte ermittelt werden, so dass die Verrechnung direkt an der Quelle beim Teilnehmer erfolgen kann. Der ermittelte Betrag kann dann entweder direkt auf einem Prepaid-Konto auf der Identifizierongskarte abgebucht werden und/oder in einem Billingbeleg verpackt und an einen Belastungsserver im Telekommunikationsnetz übermittelt werden.

Chipkarten mit einem integrierten Quarzoszillator sind jedoch schwierig herzustellen und haben eine kurze Lebensdauer, so dass sie auch teuer sind. Ausserdem erlauben die in dieser Anmeldung beschriebenen Chipkarten nur die Ermittlung der Gesprächszeit und -dauer, jedoch nicht des Standorts der anrufenden Teilnehmer.

WO-A1-97/40616 beschreibt eine andere SIM-Karte mit einem Prepaid-Konto sowie einer Uhr zur Ermittlung der Dauer eines Anrufs. In einer Variante kann das Prepaid-Konto auch mit Impulsen aus dem Netz abgebucht werden. Die Uhr wird von einer Stromquelle ausserhalb der Chipkarte gespeist; die Zeit kann somit verfälscht werden, indem die Chipkarte vorübergehend nicht gespeist wird.

Die Patentanmeldung WO-A2-99/41919 beschreibt eine Identifizierungskarte für Benutzer eines Mobilfunktelefons, in welcher alle Komponenten einer Zeitmessvorrichtung, ausser dem Quarz, enthalten sind. Die integrierte Zeitmessvorrichtung wird mit einem externen Taktsignal, zum Beispiel aus einem Quarz im Mobilgerät, synchronisiert. Ausserdem kann die eingestellte Zeit zu jeder Zeit von einem Zeitserver im Netz geprüft, und falls notwendig, korrigiert werden. Verschiedene Mechanismen erlauben es auf diese Weise, die Genauigkeit und den Gang der Zeitmessvorrichtung aus dem Zeitserver im Netz zu überprüfen.

Mit diesem Verfahren kann nicht verhindert werden, dass die Zeit zwischen zwei Korrekturen vom Benutzer verfälscht wird. Die in dieser Anmeldung beschriebene Chipkarte erlaubt es ausserdem auch nur, die Gesprächszeit und -dauer, jedoch nicht den Standort der Teilnehmer zu ermitteln.

US-A1-5,546,445 beschreibt ein Mobiltelefon mit einem integrierten GPS-Empfänger. Die Standortinformation wird an eine Vermittlungsstelle gesendet und zur Bestimmung des zu verrechnenden Betrags verwendet. Dieses System ist für Prepaid-Lösungen nicht geeignet.

Grundlagen und Anwendungen des GPS-Systems werden in E.D. Kaplan: "Understanding GPS: principles and applications", 31. Dezember 1996 (1996-12-31), Artech, Norwood, MA, US, ISBN 0-89006-763-7, beschrieben.

### Zusammenfassung der Erfindung

Es ist folglich ein Ziel der Erfindung, ein Verfahren vorzuschlagen, um die Dauer von zu verrechnenden Prozessen zu berechnen.

Erfindungsgemäss werden diese Ziele mit einem in den unabhängigen Verfahrensansprüchen beschriebenen Verfahren erreicht, wobei verschiedene Varianten in den abhängigen Ansprüchen beschrieben werden.

Insbesondere werden diese Ziele mit Hilfe eines Verfahrens erreicht, in welchem die Dauer der Verbindungen, oder die Dauer von anderen verrechneten Prozessen, mit einer Zeitangabe ermittelt wird, die mit einem GPS-Empfänger ermittelt wird. Der GPS-Empfänger besteht beispielsweise aus einer Antenne, einer Hochfrequenzschaltung und einer digitalen Bearbeitungsschaltung, wobei alle oder nur gewisse von diesen Komponenten in der Chipkarte integriert werden.

Dadurch können alle für die Auswertung des verrechneten Betrags benötigten Parameter direkt in der Chipkarte ermittelt werden, so dass die Verrechnung direkt an der Quelle beim Teilnehmer erfolgen kann. GPS-Signale sind sehr schwer zu fälschen, so dass das System eine hohe Sicherheit gewährleisten kann.

### Kurze Beschreibung der Figuren

Die vorliegende Erfindung wird mit Hilfe der Beschreibung besser verständlich, welche als Beispiel angeführt ist und durch die Figuren dargestellt wird, wobei:
- Fig. 1: ein Blockschema mit einer Identifizierungskarte in einer ersten Ausführungsform der Erfindung und einem konventionellen Endgerät zeigt,
- Fig. 2: ein Blockschema mit einer Identifizierungskarte in einer zweiten Ausführungsform der Erfindung und einem konventionellen Endgerät zeigt,
- Fig. 3: ein Blockschema mit einer Identifizierungskarte in einer dritten Ausführungsform der Erfindung und einem Endgerät zeigt,
- Fig. 4: ein Blockschema mit einer Identifizierungskarte in einer vierten Ausführungsform der Erfindung und einem Endgerät zeigt,
- Fig. 5: ein Blockschema mit einer Identifizierungskarte in einer fünften Ausführungsform der Erfindung und einem Endgerät zeigt,
- Fig. 6: ein Blockschema mit einer Identifizierungskarte in einer sechsten Ausführungsform der Erfindung und einem konventionellen Endgerät zeigt und
- Fig. 7: ein Blockschema mit einer Identifizierungskarte in einer siebten Ausführungsform der Erfindung, einem konventionellen End- gerät und einer zusätzlichen Vorrichtung zeigt.

### Wege zur Ausführung der Erfindung

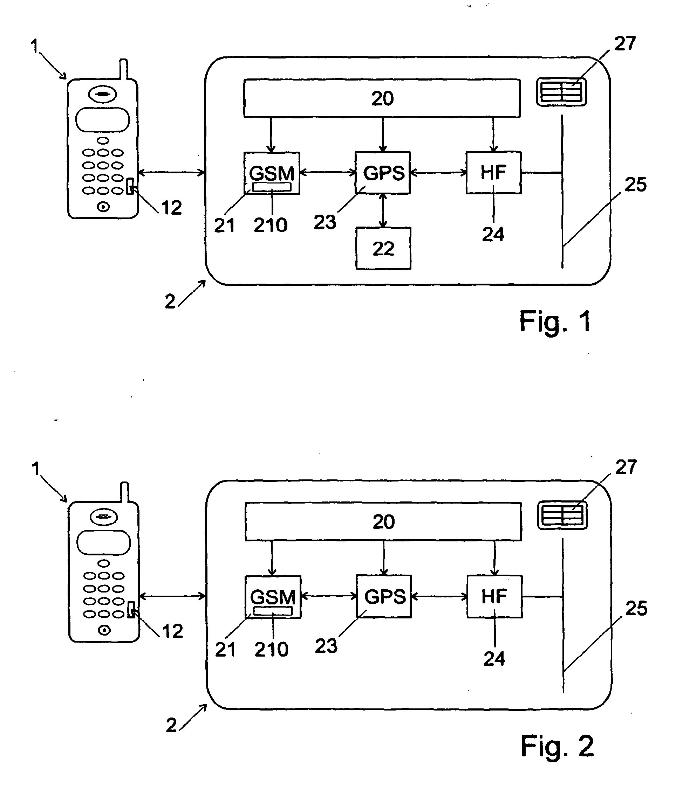

Die Fig. 1 zeigt ein Blockschema eines Systems mit einem End- bzw. Mobilgerät 1 und einer Identifizierungskarte 2. Das Gerät 1 kann beispielsweise ein digitales Mobilfunktelefon sein, zum Beispiel ein GSM oder ein UMTS-Mobilfunktelefon, oder ein Palmtop oder Laptop mit einer Kommunikationschnittstelle und einem Chipkartenleser. Das Gerät 1 könnte aber auch ein Telekommunikationsendgerät sein, beispielsweise ein Telefon oder ein Computer, das mit einem Festnetz, beispielsweise einem öffentlichen Telefonnetz oder einem PLC-Netz (Power Line Communication) verbunden ist, in welchem die Teilnehmer mit einer persönlichen Chipkarte identifiziert werden.

Die Identifizierungskarte 2, zum Beispiel eine SIM-Karte (Subscriber Identity Module), kann mit dem Endgerät verbunden sein, um den Teilnehmer in einem Telekommunikationsnetz zu identifizieren. Konventionelle SIM-Karten werden jetzt schon unter anderem in GSM- und UMTS-Mobilgeräten eingesetzt. Die SIM-Karte ist vorzugsweise eine Full-Size-Karte (ISO); sie wird durch ein Kontaktgebiet 27 auf der Oberfläche der Karte mit dem Endgerät verbunden. Andere Kartenformate und kontaktlose Karten können aber auch im Rahmen dieser Erfindung angewendet werden. Die SIM-Karte 2 enthält Daterverarbeitungsmittel, zum Beispiel einen bekannten GSM-SIM-Mikrokontroller 21. SIM-Karten sind zum Beispiel in der technischen Spezifikation GSM 11.11 und GSM 11.14 beschrieben, die seit 1995 bzw. 1996 beim Sekretariat des European Telecommunications Standards Institute, F-06921 Sophia Antipolis, erhältlich ist. Andere Identifizierungskarten, zum Beispiel Mehrzweckkarten, die unter dem Begriff Opencard bekannt sind, oder Java-Karten, können auch in dieser Erfindung eingesetzt werden.

Erfindungsgemäss enthält die SIM-Karte zusätzlich einen Empfänger für Signale, die von einer Konstellation von Satelliten in einem Standort-Bestimmungssystem, beispielsweise einem GPS-System, ausgesendet werden. Der Empfänger umfasst eine Radiofrequenz-Front End Schaltung 24, einen integrierten digitalen Prozessor, der als digitale Schaltung 23 ausgeführt ist, und eine integrierte GPS-Antenne. Sowohl der digitale Prozessor 23 als auch die Front-End Schaltung 24 sind jeweils in einem Chip integriert. Die Schaltungen 23 und 24 werden beide vorzugsweise durch einen in der Identifizierungskarte 2 enthaltenen Energiespeicher (Akkumulator, Kondensator oder Batterie 20 zum Beispiel) gespeist, zumindest wenn das Endgerät ausgeschaltet ist. Die Speisespannung beträgt vorzugsweise 3,3 Volts oder weniger, damit der Stromverbrauch begrenzt bleibt.

Die Front End Schaltung 24 besteht vorzugsweise aus einem ASIC, das das GPS Signal mit einer Frequenz von ca. 1,575 GHz in ein Signal mit einer niedrigeren Frequenz umwandelt, das vom digitalen Prozessor bearbeitet werden kann. Die Schaltung 24 wird vorzugsweise mit bipolaren Transistoren realisiert, oder mit einer anderen schnellen Technologie. Die Front-End Schaltung kann eventuell auch einen Verstärker für das Signal aus der Antenne 25 umfassen.

Die digitale Schaltung 23 umfasst beispielsweise einen universtellen Prozessor, oder vorzugsweise einen Signalprozessor (DSP), der beispielsweise mit CMOS oder mit einer anderen stromsparenden Technologie realisiert werden kann, sowie ein ROM, ein RAM und eventuell einige Korrelatoren. Mit einem an sich bekannten Programm im ROM kann der Prozessor in der Schaltung 23 die Signale aus der Schaltung 24 bearbeiten und aus diesen Signalen eine Zeitinformation und eventuell eine Standortinformation ermitteln.

Ein Oszillator 22, beispielsweise ein Quarzoszillator, ein LC-Oszillator oder ein Oszillator, der eine elektrische Frequenz aus einer Interferenz zwischen zwei optischen Frequenzen eines Lasers erzeugen kann, ist in dieser Variante auch in der Identifizierungskarte 2 integriert. Die vom Oszillator 22 erzeugte Frequenz wird unter anderem verwendet, um die GPS-Frequenzen zu scannen.

Die Antenne 25 ist in dieser Ausführungsform ebenfalls in der Chipkarte 2 integriert. In dieser Variante enthält die Karte sämtliche Komponenten eines GPS-Empfängers und kann die Zeit und den Standort auch ermitteln, wenn sie nicht mit dem Mobilgerät 1 verbunden ist. Da alle Komponenten des GPS-Empfängers in der Identifizierungskarte 2 integriert sind, ist es ausserdem sehr schwer, für einen Fälscher die eingestellte Zeit oder den Standort zu fälschen.

Die digitale Schaltung 23 ist mit einem konventionellen GSM-Prozessor 21 verbunden. Die vom GPS-Empfänger ermittelte Zeit- und Standortinformation wird dem GSM-Prozessor 21 abgegeben. Mit dieser Zeitinformation kann der Prozessor 21 die absolute Zeit und die Dauer bestimmter Prozesse in der Identifizierungskarte 2, beispielsweise die Dauer einer telefonischen Verbindung, ermitteln. Der GSM-Prozessor 21 umfasst ausserdem vorzugsweise Tariftabellen, mit welchen er die Telekommunikationsgebühren in Abhängigkeit der Zeit, der Dauer der Verbindung und/oder des Standorts des Teilnehmers ermitteln kann. Diese Tariftabellen werden vorzugsweise aus einem vom Netzbetreiber verwalteten Tarifserver im Netz mittels kryptographisch signierter und verschlüsselter SMS- oder USSD Meldungen ferngeladen, und werden in einem gesicherten Bereich 210 des Prozessors 21 gespeichert, so dass sie vom Benutzer nicht geändert werden können. Der Prozessor 21 prüft, ob die empfangenen Tariftabellen tatsächlich von einem autorisierten Netzbetreiber signiert worden sind. Die Internationale Anmeldung WO-A2-99/41919 beschreibt andere Prozesse, um die Zeit beim Einloggen der SIM-Karte im Kommunikationsnetz einzustellen.

Auf diese Weise kann der ermittelte Betrag sofort auf der Anzeige des Mobilgeräts 1 angezeigt werden und von einem Prepaid-Konto einer vorbezahlten SIM-Karte abgebucht werden, oder in einem signierten Beleg verpackt werden und an ein Finanzdienstleistungsunternehmen (Bank oder Netzoperator) Übermittelt werden. Die erfindungsgemässe Karte kann aber auch eingesetzt werden, um die Dauer von anderen Prozessen in der Identifizierungskarte 2 zu messen, beispielsweise die Benutzungsdauer von bestimmten Diensten oder Anwendungen oder die Benutzung von nicht für die Verkehrsabwicklung zuständigen Ressourcen.

Es ist ausserdem möglich, die erfindungsgemässe Chipkarte für andere Anwendungen als die Mobilfunktelefonie einzusetzen. Solche Chipkarten können beispielsweise auch in Pay-TV-Systemen oder in vernetzten Computern benutzt werden, beispielsweise um eine benutzungszeitabhängige Rechnung, die von der Benutzungszeit, von der Benutzungsdauer und/oder vom Standort des Benutzers abhängt, zu erstellen. Die Chipkarte 2 kann auch als Identifizierungskarte 2 in einem Festnetz oder in einem PLC (Power Line Communication) Netz angewendet werden, in welchen die Teilnehmer mit persönlichen Chipkarten identifiziert werden.

Der Prozessor 21 kann im Rahmen dieser Erfindung auch ein an sich bekannter Java-Prozessor sein, der beispielsweise auch WAP-Modulen (Wireless Application Protocol) enthalten kann, um die Identifizierungskarte 2 mit dem Internet zu verbinden. Es ist auch im Rahmen dieser Erfindung möglich, zum Beispiel den GSM-Prozessor 21 und die digitale Schaltung 23 in einem einzigen Chip zu integrieren.

Vorzugsweise benutzt die GPS-Schaltung die vom Mobilgerät und vom Mobilfunknetz erhaltene Zeit- und Standortinformation, um sich schneller und auch in schwierigen Empfangsbedingungen mit dem empfangenen GPS-Signal zu synchronisieren.

In einer Variante benutzt die SIM-Karte die Zeit- und Standortinformation vom Mobilgerät und/oder vom Mobilfunknetz, beispielsweise von der Basisstation, wenn sie kein GPS-Signal empfangen kann, zum Beispiel im Inneren von Gebäuden. In diesem Fall wird die Zeit erst dann automatisch eingestellt, wenn die Identitizierungskarte 2 eine neue Zeitinformation aus einem GPS-Satellit empfangen kann. Die Benutzung der Karte kann mit einer speziellen Anwendung automatisch gesperrt werden, wenn die Identifizierungskarte 2 innerhalb einer bestimmten Zeit nicht eingestellt wurde.

Die Fig. 2 zeigt ein Blockschema einer Identifizierungskarte 2 in einer zweiten Ausführungsform der Erfindung. In dieser Variante enthält die Identifizierungskarte 2 keinen eigenen Oszillator für das Scanning des GPS-Frequenzen, sondern benutzt zu diesem Zweck den Quarzoszillator 12, der sowieso in den meisten Mobilgeräten 1 enthalten ist. In dieser Variante kann die Karte nicht funktionieren, wenn sie nicht mit einem Mobilgerät verbunden ist. Die ermittelte Zeit kann jedoch nicht mit einer einfachen Manipulation des Mobilgeräts oder einem Ersatz des Quarzes verfälscht werden, so dass diese Ausführungsform die gleiche Sicherheit wie die erste aufgeführte Ausführungsform gewährleistet.

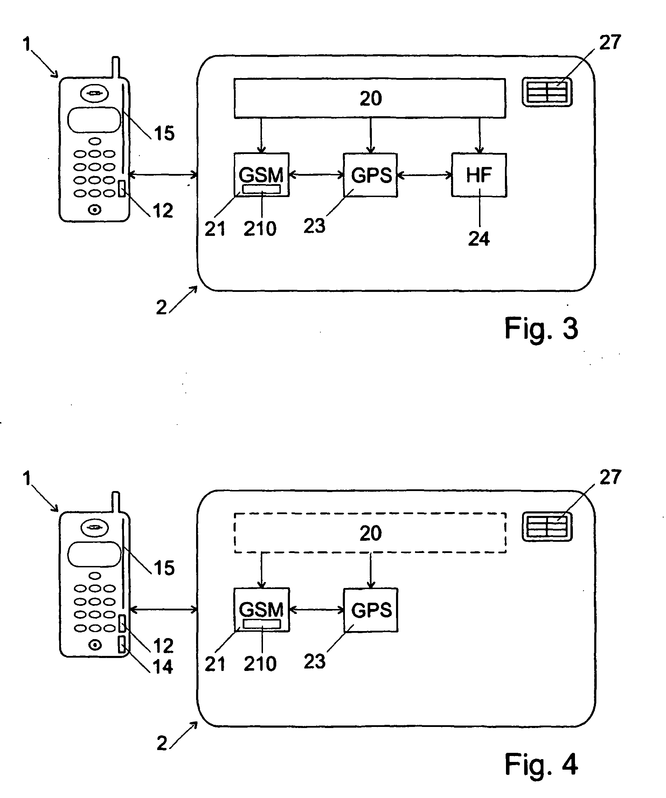

Die Fig. 3 zeigt ein Blockschema einer Identifizierungskarte 2 in einer dritten Ausführungsform der Erfindung. In dieser Variante benutzt die Karte auch den Quarzoszillator 12 des Mobilgeräts. Ausserdem enthält sie keine GPS-Antenne, sondern benutzt eine im Mobilgerät integrierte Antenne 15, wobei das empfangene Signal über das Kontaktgebiet 27 an die RF-Front End Schaltung 24 übermittelt wird. Diese Variante erlaubt es, eine bessere, grössere Antenne zu verwenden, und ausserdem die Antenne ausserhalb der Gehäuse des Mobilgeräts oder im Gehäuse der einsteckbaren Batterie zu montieren, so dass das Problem der Dämpfung des GPS-Signales im Inneren der Gehäuse gelöst wird. Allerdings kann diese Variante nur mit Mobilgeräten funktionieren, die über eine GPS-Antenne verfügen.

Die Fig. 4 zeigt ein Blockschema einer Identifizierungskarte 2 in einer vierten Ausführungsform der Erfindung. In dieser Variante benutzt die Karte auch den Quarzoszillator 12 und die GPS-Antenne 15 des Mobilgeräts 1. Ausserdem benutzt sie eine Radiofrequenz-Schaltung 14, die auch im Mobilgerät 1 vorhanden ist. Die Signale zwischen der Schaltung 14 und der digitalen Schaltung 23 werden auch über das Kontaktgebiet 27 übermittelt. Da die GPS-Signale kodiert werden, ist es sehr schwierig, falsche Signale zu erzeugen, so dass diese Variante auch eine hohe Sicherheit bietet.

Da die Identifizierungskarte 2 nur noch die stromsparende Komponenten GSM-Prozessor 21 und Schaltung 23 umfasst, ist es auch möglich, auf die Batterie 20 zu verzichten und nur die Batterie vom Mobilgerät 1 zu verwenden.

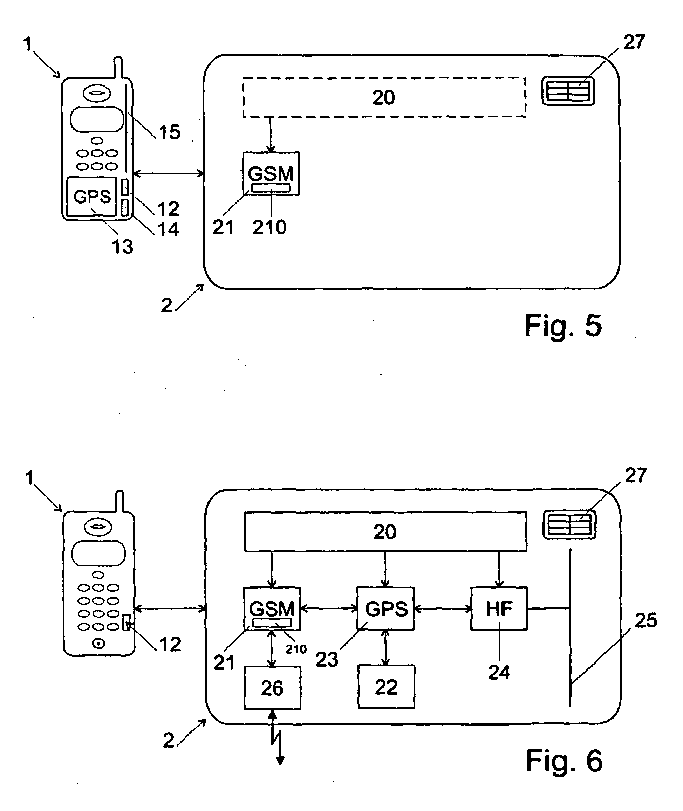

Die Fig. 5 zeigt ein Blockschema einer Identifizierungskarte 2 in einer fünften Ausführungsform der Erfindung. In dieser Variante benutzt die Karte auch den Quarzoszillator 12, die GPS-Antenne 15 und die Radiofrequenzschaltung 14 des Mobilgeräts 1. Ausserdem benutzt sie mindestens gewisse Funktionen einer im Mobilgerät 1 integrierten GPS-digitalen-Schaltung, so dass die Identifizierungskarte 2 nur einige sicherheitskritische GPS-Operationen durchführt. Diese Operationen können beispielsweise auch vom GSM-Prozessor 21 durchgeführt werden. In dieser Variante erhält die Identifizierungskarte 2 digitale und vorzugsweise elektronisch signierte und verschlüsselte Signale aus der Schaltung 13, die in einer schwer zu generierenden Form sind, und ermittelt aus diesen Signalen die Zeit- und/oder die Standortinformation.

Diese Variante bietet den Vorteil, dass sie keine Hardwareanpassungen benötigt. Sie kann beispielsweise mit einer konventionellen SIM-Karte, beispielsweise mit einer JAVA-Karte oder mit einer OpenCard-Karte, eingesetzt werden, die mit einer neuen Anwendung programmiert worden ist, mit welcher die Karte auf bestimmte Signale der Schaltung 14 zugreifen kann.

Die Fig. 6 zeigt ein Blockschema einer Identifizierungskarte 2 in einer sechsten Ausführungsform der Erfindung. Diese Variante entspricht der Ausführungsform der Fig. 1, ausser dass die Karte mit einer zusätzlichen kontaktlosen Schnittstelle 26 versehen ist, zum Beispiel einer elektromagnetischen Schnittstelle, wie beispielsweise in der Anmeldung PCT/CH97/00237 beschrieben, oder einer hochfrequenten Schnittstelle, zum Beispiel einer sogenannten "Bluetooth-Schnittstelle". Mit dieser Schnittstelle kann die SIM-Karte kontaktlos mit externen Geräten kommunizieren, beispielsweise um Prozesse von externen Geräten zu verrechnen.

Eine kontaktlose Schnittstelle 26 kann auch in Chipkarten 2 gemäss einer der anderen Ausführungsformen der Fig. 2 bis 5 vorgesehen werden.

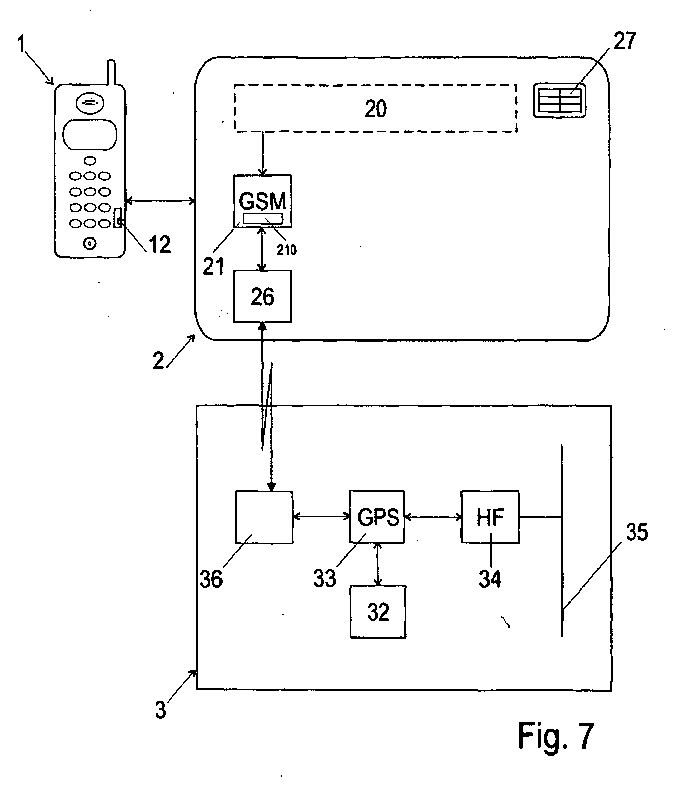

Die Fig. 7 zeigt ein Blockschema eines Systems mit einer Identifizierungskarte 2 in einer siebten Ausführungsform der Erfindung. In dieser Variante umfasst die Karte einen konventionellen Prozessor 21, beispielsweise einen GSM-Prozessor oder einen Mehrzweck-JAVA-Prozessor, sowie eine kontaktlose Schnittstelle 26, vorzugsweise eine elektromagnetische Schnittstelle, beispielsweise eine Bluetooth- Schnittstelle. Die SIM-Karte kann sich über diese kontaktlose Schnittstelle mit einer externen Vorrichtung 3 verbinden, die über einen GPS-Empfänger verfügt. Im dargestellten Beispiel umfasst die externe Vorrichtung 3 eine kontaktlose Schnittstelle 36, beispielsweise eine RFID-Schnittstelle, die mit einer Frequenz von 135KHz, 13,65MHz, 2,45GHz oder 5,8 GHz arbeitet, oder eine Bluetooth-Schnittstelle, eine GPS-Antenne 35, eine Radiofrequenz Front-End Schaltung 34, eine digitale GPS-Schaltung 33 und einen Oszillator 32. Die externe Vorrichtung 3 verfügt ausserdem vorzugsweise über nicht dargestellte Signierungsmittel, um die mit dem GPS-Empfänger erhaltene Zeit- und Standortinformation zu signieren, in Belegen zu verpacken und um diese Belege über die Schnittstelle 36-26 an die Chipkarte 2 weiterzuleiten.

Die Chipkarte 2 kann dann diese Belege empfangen und prüfen, ob sie von einer vom Netzbetreiber zugelassene Vorrichtung 3 signiert worden sind. In diesem Fall kann die Chipkarte 2 mit Hilfe von Tariftabellen im gesicherten Speicherbereich 210 Prozesse auf Basis der empfangenen Zeit- und/oder Standortinformation verrechnen.

Die externe Vorrichtung 3 kann vorzugsweise über nicht dargestellte Kommunikationsmittel verfügen, mit welchen sie digitale Daten über ein nicht dargestelltes Netz empfangen kann. Beispielsweise kann die Vorrichtung 3 über ein Modem oder über einen Router verfügen, mit welchem sie im Internet kommunizieren kann. Vorzugsweise umfasst die Vorrichtung 3 einen DAB-Empfänger (Digital Audio Broadcasting), mit welchem sie digitale Daten in Broadcast-Modus empfangen kann. Diese Daten können dann auch über die Schnittstelle 26-36 übermittelt werden. Auf diese Weise können beispielsweise aktualisierte Tariftabellen über diesen Weg in die SIM-Karte 2 übertragen werden.

## Patentansprüche

1. Verfahren, um die Dauer von zu verrechnenden Prozessen zu ermitteln, umfassend die folgenden Verfahrenschritte:
Identifizierung eines Benutzers in einem Mobilfunknetz mittels einer Chipkarte (2),
wobei eine Zeitinformation mit einem GPS-Empfänger für ein Satelliten-Standortbestimmungssystem (23,24,25; 23,24,15; 23,14,15; 13,14,15; 33,34,35) ermittelt wird, **dadurch gekennzeichnet, dass** die benannte Zeitinformation verwendet wird, um die Dauer von den verrechneten Prozessen zu ermitteln, wobei die Zeitinformation mit dem in der Chipkarte (2) enthaltenen GPS-Empfänger ermittelt wird, wobei der GPS-Empfänger eine Standortinformation ermittelt,
wobei die Zeit- und Standortinformation an einen in der Chipkarte enthaltenen GSM-Prozessor abgegeben werden, der die Dauer ermittelt,
wobei der GSM-Prozessor in Abhängigkeit von der Zeit, der Dauer und dem Standort eine Telekommunikationsgebühr ermittelt.

## Claims

1. Method for determining the duration of processes to be billed, comprising the following steps
Identifying of a user in a mobile radio network by means of a chip card (2); wherein a time information is determined with a GPS-receiver of satellite location determination system (23, 24, 25; 23, 24, 15; 23, 14, 15; 13,14,15; 33,34, 35), **characterised in that** said time information is used for determining the duration of processes to be billed, wherein the time information is determined with the GPS-receiver of satellite location determination system located in the chip card (2), wherein the GPS receiver determines a location information,
wherein the time and location information are given to a GSM processor located in the chip card, which determines the duration, wherein the GSM processor determines dependent on the time, the duration and the location a telecommunication fee.

## Revendications

1. Méthode pour déterminer la durée de procédés à facturer, comprenant les étapes suivantes :
identification d'un utilisateur dans un réseau de téléphonie mobile aux moyens d'une carte à puce (2),
selon laquelle une information de temps est déterminée avec un récepteur GPS d'un système de localisation par satellite (23, 24, 25; 23, 24, 15; 23, 14, 15; 13,14,15; 33,34, 35), **caractérisée en ce que** ladite information de temps est utilisée pour déterminer la durée de procédés à facturer, selon laquelle l'information de temps est déterminée avec le récepteur GPS d'un système de localisation par satellite logé dans la carte à puce (2), selon laquelle le récepteur GPS déterminer une information de localisation, selon laquelle les informations de temps et de localisation sont transmises à un processeur GSM logé dans la carte à puce, qui détermine la durée, selon laquelle le processeur GSM détermine en accord avec le temps, la durée et la localisation une redevance de télécommunication.
